# EUROPÄISCHE PATENTSCHRIFT

(11) **EP 2 998 664 B1**
(45) Veröffentlichungstag und Bekanntmachung des Hinweises auf die Patenterteilung: **19.07.2017**
(21) Anmeldenummer: 15185999.8
(22) Anmeldetag: 21.09.2015
(51) Int. Cl.: F24H 1/00, F24H 1/26, F24H 8/00

(54) **FAHRZEUGHEIZGERÄT MIT WÄRMETAUSCHERANORDNUNG**
VEHICLE HEATING DEVICE WITH HEAT EXCHANGER ASSEMBLY
APPAREIL DE CHAUFFAGE DE VEHICULE AVEC ENSEMBLE ECHANGEUR DE CHALEUR

(30) Priorität: 22.09.2014 DE 102014219044
(43) Veröffentlichungstag der Anmeldung: 23.03.2016
(73) Patentinhaber: Eberspächer Climate Control Systems GmbH & Co. KG, 73730 Esslingen (DE)
(72) Erfinder: Haefner, Michael, 70469 Stuttgart (DE); Alber, Andreas, 70619 Stuttgart (DE); Bauer, Thomas, 72581 Dettingen (DE)
(74) Vertreter: RLTG

(56) Entgegenhaltungen:
- DE-A1- 3 546 368
- DE-A1- 4 211 153
- DE-A1- 19 845 583
- DE-A1-102004 008 358
- DE-B- 1 168 933
- DE-B- 1 291 496

## Beschreibung

Die vorliegende Erfindung betrifft ein Fahrzeugheizgerät mit einer Wärmetauscheranordnung, umfassend ein inneres topfartiges Gehäuse und ein äußeres topfartiges Gehäuse, zwischen welchen ein Strömungsraum für zu temperierendes Fluid definiert ist.

Derartige Wärmetauscheranordnungen werden dazu verwendet, in einer Brennkammer durch Verbrennung eines Brennstoff/Luft-Gemisches erzeugte Wärmeenergie auf ein als Wärmeträgermedium dienendes Fluid zu übertragen. Zur Überwachung des Betriebs des Fahrzeugheizgeräts ist im Allgemeinen ein Flammfühler vorgesehen, welcher im Bereich einer Abgasaustrittsöffnung an der Wärmetauscheranordnung bereitgestellt sein kann. Ein derartiger Flammfühler kann beispielsweise als Fotodiode oder als Leitfähigkeitssensor ausgebildet sein und ist dazu eingerichtet, einen Flammabbruch zu registrieren. Wird ein Flammabbruch registriert, wird im Allgemeinen eine Neuzündung des in der Brennkammer vorhandenen Brennstoff/Luft-Gemisches veranlasst.

Beim Anlassen des Fahrzeugheizgeräts in einem kalten Zustand, kann es dazu kommen, dass in den Abgasen in Form von Dampf transportierte Substanzen, wie etwa Wasser, in der Wärmetauscheranordnung kondensieren und sich in der Nähe des Flammfühlers ansammeln, wodurch die Gefahr entsteht, dass durch nachfolgend vorbeiströmende Abgase das angesammelte Kondenswasser aufgewirbelt wird und mit dem Flammfühler in Kontakt tritt. Dieser Kontakt kann den Flammfühler in seinem Betriebsverhalten derart beeinflussen, dass er ein Flammabbruchsignal an eine Steuerungseinrichtung ausgibt, woraufhin diese, wie vorangehend erläutert, einen Neustart des Fahrzeugheizgeräts initiiert, was zumindest zu einer kurzzeitigen Unterbrechung des Heizbetriebs führt.

Aus der DE 10 2004 008 358 A1 ist ein Fahrzeugheizgerät gemäß dem Oberbegriff des Anspruchs 1 bekannt. Bei diesem bekannten Fahrzeugheizgerät strömen die ein Flammrohr verlassenden Verbrennungsabgase in Richtung zu der inneren Bodenwandung des inneren Gehäuses und strömen nach Umlenkung an dieser inneren Bodenwandung entlang der inneren Umfangswandung des inneren Gehäuses zurück. Nach Verlassen des vom inneren Gehäuse umschlossenen Innenraums werden die Verbrennungsabgase erneut umgelenkt und strömen entlang der Außenseite der äußeren Umfangswandung des äußeren Gehäuses zu einer Abgasaustrittsöffnung.

Aus der DE 11 68 933 B ist ein Erhitzter für Flüssigkeiten bekannt. Dieser Erhitzer weist ein inneres topfartiges Gehäuse und ein äußeres topfartiges Gehäuse mit einem dazwischen gebildeten Strömungsraum für die zu erhitzende Flüssigkeit auf. In dem von dem inneren Gehäuse umschlossenen Innenraum strömen die Verbrennungsabgase zu einer Abgasaustrittsöffnung. Neben der Abgasaustrittsöffnung ist ein Kondensatablauf gebildet, über welchen Kondensat und aus einer Brennkammer austretendes Öl abgeleitet werden können.

Es ist eine Aufgabe der vorliegenden Erfindung, ein Fahrzeugheizgerät mit einer Wärmetauscheranordnung bereitzustellen, mit welcher die Wahrscheinlichkeit für eine Betriebsunterbrechung aufgrund von in der Wärmetauscheranordnung angesammelter Kondensflüssigkeit minimiert werden kann.

Diese Aufgabe wird gemäß der vorliegenden Erfindung mit einem Fahrzeugheizgerät mit einer Wärmetauscheranordnung gemäß Anspruch 1 gelöst. Die Wärmetauscheranordnung umfasst:
- ein eine äußere Bodenwandung und eine sich entlang einer Längsachse erstreckende äußere Umfangswandung aufweisendes äußeres topfartiges Gehäuse,
- ein eine innere Bodenwandung und eine sich entlang der Längsachse erstreckende innere Umfangswandung aufweisendes inneres topfartiges Gehäuse, wobei zwischen dem inneren Gehäuse und dem äußeren Gehäuse ein Strömungsraum für zu temperierendes Fluid gebildet ist, und
- wenigstens einen Flüssigkeitsaufnahmebereich zum Aufnehmen von in dem inneren Gehäuse kondensierter Flüssigkeit.

Durch Vorsehen eines erfindungsgemäßen Flüssigkeitsaufnahmebereichs zum Aufnehmen von in dem inneren Gehäuse kondensierter Flüssigkeit, besteht die Möglichkeit, insbesondere zu Betriebsbeginn kondensierte Flüssigkeit in einem Bereich zu sammeln, in welchem die Wahrscheinlichkeit eines Aufwirbelns durch vorbeiströmende Abgase minimiert wird. Hierdurch kann eine Beeinträchtigung des Betriebsverhaltens eines Flammfühlers durch aufgewirbelte Kondensflüssigkeit verhindert werden, so dass ein Neustart des Fahrzeugheizgeräts nur dann durchgeführt wird, wenn tatsächlich ein Flammabbruch vorliegt.

Da ein Flammfühler typischerweise im Bereich einer Abgasaustrittsöffnung der Wärmetauscheranordnung angeordnet ist, ist wenigstens ein Flüssigkeitsaufnahmebereich im Bereich einer Abgasaustrittsöffnung vorgesehen. Dadurch kann ein kurzer Strömungsweg mit entsprechend kleinen Strömungsverlusten zu einem entsprechenden Flüssigkeitsaufnahmebereich sichergestellt werden, so dass ein Großteil der kondensierten Flüssigkeit in diesem gesammelt werden kann.

Erfindungsgemäß ist vorgesehen, dass wenigstens einer des wenigstens einen Flüssigkeitsaufnahmebereiches über eine Öffnung am inneren Gehäuse mit einem vom inneren Gehäuse umschlossenen Innenraum in Verbindung steht.

Hierdurch besteht die Möglichkeit, die in dem jeweiligen Flüssigkeitsaufnahmebereich gesammelte Kondensflüssigkeit bei Erreichen einer ausreichend hohen Temperatur in den Strömungsbereich des abströmenden Abgases durch Verdampfen abzugeben, wodurch es mit dem Abgas die Wärmetauscheranordnung wieder verlassen kann. Daher sind also keine zusätzlichen Ablassmittel an einem entsprechenden Flüssigkeitsaufnahmebereich erforderlich, um darin angesammelte Kondensflüssigkeit abzulassen.

Hierbei ist weiter vorgesehen, dass die Öffnung in Umfangsrichtung oder/und in Richtung der Längsachse eine kleinere Erstreckung als der Flüssigkeitsaufnahmebereich aufweist. Hierdurch wird also eine relativ zur Erstreckung eines Flüssigkeitsaufnahmebereichs kleine potenzielle Wechselwirkungsfläche zwischen den abströmenden Abgasen und der in einem Flüssigkeitsaufnahmebereich angesammelten Kondensflüssigkeit sichergestellt, wodurch wiederum die Wahrscheinlichkeit minimiert werden kann, dass die darin gesammelte Kondensflüssigkeit durch abströmende Abgase aufgewirbelt wird und dadurch in Kontakt mit dem Flammfühler tritt.

Um einen insgesamt kompakten Aufbau der Wärmetauscheranordnung bereitstellen zu können, kann weiter vorgesehen sein, dass wenigstens ein Flüssigkeitsaufnahmebereich am inneren Gehäuse gebildet ist. Es ist zwar grundsätzlich auch denkbar, den Flüssigkeitsaufnahmebereich durch ein zusätzliches, an dem inneren oder dem äußeren Gehäuse vorzusehendes Element bereitzustellen, indem ein Flüssigkeitsaufnahmebereich am inneren Gehäuse jedoch gebildet ist, wird die Notwendigkeit eines derartigen zusätzlichen Elements beseitigt.

Um zumindest zu Beginn eines Betriebs des Fahrzeugheizgeräts sehr schnell abgeschiedene Kondensflüssigkeit auffangen zu können und somit ein Aufwirbeln durch abströmende Abgase vermeiden zu können, kann in Weiterbildung der Erfindung vorgesehen sein, dass wenigstens einem Flüssigkeitsaufnahmebereich wenigstens ein, vorzugsweise durch einen stufenartigen Absatz bereitgestellter, Flüssigkeitsführungskanal zum Führen von kondensierter Flüssigkeit zu dem Flüssigkeitsaufnahmebereich hin zugeordnet ist. Ein derartiger Flüssigkeitsführungskanal kann beispielsweise rinnenartig ausgebildet sein und in der Betriebsstellung der Wärmetauscheranordnung derart angeordnet sein, dass die abgeschiedene Kondensflüssigkeit durch Schwerkrafteinwirkung zum Flüssigkeitsaufnahmebereich hin abfließen kann.

Vorzugsweise ist die Abgasaustrittsöffnung dabei in einem von der inneren Bodenwandung in Richtung der Längsachse entfernten Endbereich des inneren Gehäuses vorgesehen. Typischerweise wird in einer eingangs definierten Wärmetauscheranordnung das aus der Brennkammer hineinströmende Abgas im Bereich der inneren Bodenwandung in die Wärmetauscheranordnung eingeleitet. An der inneren Bodenwandung werden die einströmenden Abgase umgelenkt und strömen dann im Wesentlichen in Richtung der Längsachse entlang einem Großteil der inneren Umfangswandung in den von der inneren Bodenwandung entfernten Endbereich des inneren Gehäuses. Hierdurch kann einerseits eine effiziente Energieübertragung von den einströmenden Abgasen auf das innere Gehäuse erzielt werden und andererseits kann mit einem derartigen Aufbau auch dazu beigetragen werden, dass ein Teil der in den Abgasen in Form von Dampf transportierten Substanzen, wie etwa Wasser, bereits auf dem Weg zur Abgasaustrittsöffnung an der inneren Bodenwandung und der inneren Umfangswandung kondensiert, wodurch dafür gesorgt werden kann, dass sich im Bereich der Abgasaustrittsöffnung wenig Flüssigkeit durch Kondensation abscheidet.

Um bei einem derartigen Aufbau im Bereich der Abgasaustrittsöffnung besonders effizient Flüssigkeit sammeln zu können, kann in Weiterbildung der Erfindung vorgesehen sein, dass wenigstens ein Flüssigkeitsführungskanal von der Abgasaustrittsöffnung zu einem Flüssigkeitsaufnahmebereich führt.

Um je nach Fahrzeugtyp die Einbaulage eines Fahrzeugheizgerätes individuell an die jeweiligen strukturellen Gegebenheiten anpassen zu können und trotzdem sicherstellen zu können, dass kondensierte Flüssigkeit in der Wärmetauscheranordnung unabhängig von der Einbaulage sicher gesammelt werden kann, kann weiter vorgesehen sein, dass eine Mehrzahl von in der Umfangsrichtung aufeinander folgend angeordneten Flüssigkeitsaufnahmebereichen vorgesehen ist. Hierdurch kann also unabhängig von der Einbaulage der Wärmetauscheranordnung im Inneren der Wärmetauscheranordnung kondensierte Flüssigkeit z. B. durch Schwerkrafteinwirkung einem in einer Schwerkraftrichtung am niedrigsten gelegenen Flüssigkeitsaufnahmebereich effizient zugeführt werden.

Um eine besonders effiziente Flüssigkeitssammlung sicherstellen zu können, kann dabei weiter vorgesehen sein, dass in Umfangsrichtung beidseits der Abgasaustrittsöffnung jeweils mindestens ein Flüssigkeitsaufnahmebereich vorgesehen ist. Mit einem derartigen Aufbau kann also insbesondere im Bereich der Abgasaustrittsöffnung dafür gesorgt werden, dass Kondensflüssigkeit vom Abgasaustrittsbereich effektiv ferngehalten wird, so dass diese nicht mit einem im Bereich der Abgasaustrittsöffnung bereitgestellten Flammfühler in Kontakt treten kann.

Die Herstellung der Wärmetauscheranordnung lässt sich besonders einfach gestalten, wenn wenigstens ein Flüssigkeitsaufnahmebereich im inneren Gehäuse in Richtung der Längsachse offen ausgebildet ist. Diese Weiterbildung bietet die Möglichkeit, das innere Gehäuse als Gussteil zu fertigen oder wenigstens einen Flüssigkeitsaufnahmebereich nachträglich, beispielsweise durch Fräsen, einzubringen.

Die vorliegende Erfindung wird nachfolgend durch Bezugnahme auf die beigefügten Zeichnungen näher erläutert werden. Dabei ist:
- Fig. 1: eine Perspektivansicht einer Wärmetauscheranordnung eines erfindungsgemäßen Fahrzeugheizgerätes;
- Fig. 2: eine Querschnittansicht der in Fig. 1 gezeigten Wärmetauscheranordnung; und
- Fig. 3: eine Längsschnittansicht der in den Figuren 1 und 2 gezeigten Wärmetauscheranordnung gemäß der in Fig. 2 gezeigten Linie III-III.

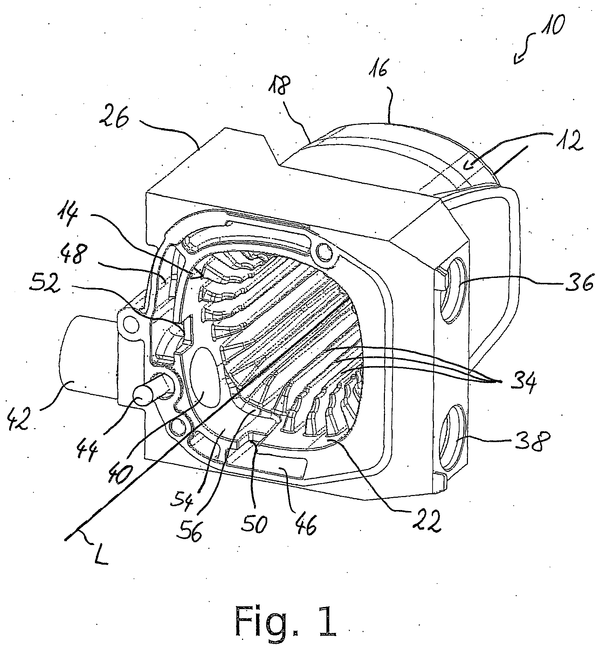

In den Fig. 1 bis 3 ist eine Wärmetauscheranordnung ganz allgemein mit dem Bezugszeichen 10 versehen. Diese umfasst ein äußeres topfartiges Gehäuse 12 und ein inneres topfartiges Gehäuse 14. Das äußere Gehäuse 12 weist eine äußere Bodenwandung 16 und eine äußere Umfangswandung 18 auf. Das innere Gehäuse 14 weist eine innere Bodenwandung 20 und eine innere Umfangswandung 22 auf. Die äußere Umfangswandung 18 und die innere Umfangswandung 22 erstrecken sich jeweils im Wesentlichen entlang einer Längsachse L der Wärmetauscheranordnung 10. Zwischen dem äußeren Gehäuse 12 und dem inneren Gehäuse 14 ist ein Strömungsraum 24 für zu temperierendes Fluid definiert.

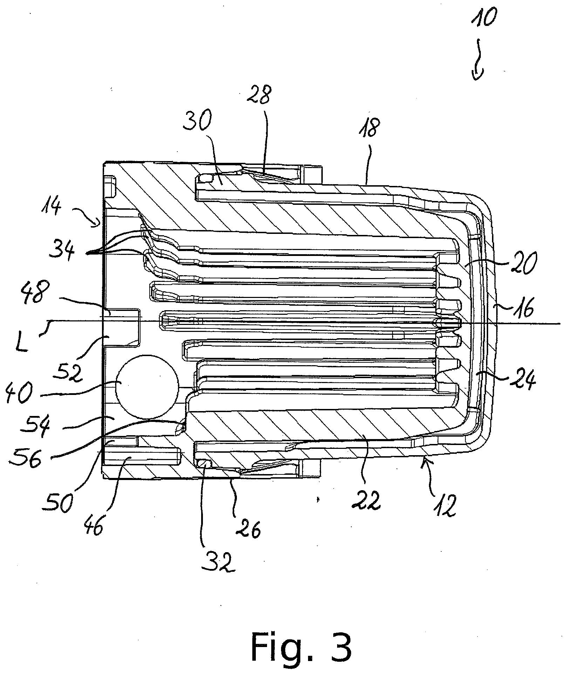

Wie in Fig. 3 gezeigt, weist das innere Gehäuse 14 einen Kragenabschnitt 26 auf, welcher zusammen mit der inneren Umfangswandung 22 einen Aufnahmeraum 28 für einen von der äußeren Bodenwandung 16 entfernten axialen Endbereich 30 des äußeren Gehäuses 12 definiert. Zwischen dem axialen Endbereich 30 des äußeren Gehäuses 12 und dem Kragenabschnitt 26 kann, wie hier dargestellt, zudem ein Dichtungsring 32 zum Abdichten des Strömungsraums 24 vorgesehen sein.

Das innere Gehäuse 14 weist eine Mehrzahl von Wärmeleitrippen 34 auf, welche sich sowohl im Wesentlichen entlang der Längsachse L und in Umfangsrichtung aufeinander folgend an der inneren Umfangswandung 22 als auch an der inneren Bodenwandung 20 erstrecken.

Im Betrieb ragt ein von einer Brennkammer eines brennstoffbetriebenen Heizgeräts ausgehendes Brennrohr in die Wärmetauscheranordnung 10 hinein, so dass ein offener Endbereich des Brennrohrs im Wesentlichen der inneren Bodenwandung 20 gegenüberliegt. Aus dem Brennrohr über den offenen Endbereich abströmende Abgase treffen daher zunächst auf die innere Bodenwandung 20, werden an dieser umgelenkt und strömen dann im Wesentlichen in Richtung der Längsachse L von der inneren Bodenwandung 20 weg entlang der inneren Umfangswandung 22. Hierbei wird Wärmeenergie auf die innere Umfangswandung 22 und daher auch auf das im Strömungsraum 24 strömende Fluid übertragen, wobei durch die Wärmeleitrippen 34 ein besonders effektiver Energieübertrag ermöglicht wird. Das zu erwärmende Fluid wird über eine in Fig. 1 dargestellte Eintrittsöffnung 36 dem Strömungsraum 24 zugeführt und über eine Austrittsöffnung 38 aus diesem abgeführt. Anschließend kann es beispielsweise einer weiteren Wärmetauscheranordnung zugeführt werden, in welcher es einen Teil seiner Wärmeenergie auf in einen Fahrzeuginnenraum zu dessen Erwärmung einzuleitende Luft übertragen kann.

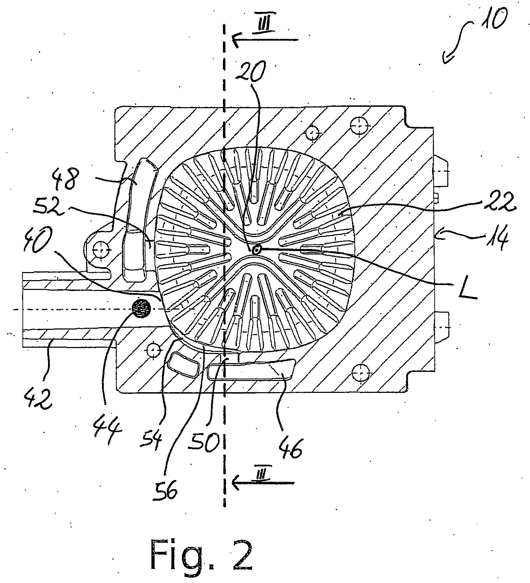

In einem von der inneren Bodenwandung 20 entfernten Endbereich der Wärmetauscheranordnung 10 in Richtung der Längsachse L ist eine Abgasaustrittsöffnung 40 bereitgestellt, an welche sich, wie in Fig. 2 dargestellt, ein Abgasauslassrohr 42 anschließt. Im Bereich der Abgasaustrittsöffnung 40 ist ein Flammfühler 44 vorgesehen. Dieser kann beispielsweise als Fotodiode oder als Leitfähigkeitssensor ausgebildet sein und ist dazu eingerichtet, einen Flammabbruch zu registrieren. Wird ein Flammabbruch registriert, wird durch eine hier nicht dargestellte Steuerungsvorrichtung eine Neuzündung des in der Brennkammer vorhandenen Brennstoff/Luft-Gemisches veranlasst.

Insbesondere bei der Aufnahme eines Betriebs des Fahrzeugheizgeräts, in welchem sich die Wärmetauscheranordnung 10 in einem kalten Zustand befindet, können in den Abgasen in Form von Dampf transportierte Substanzen, wie etwa Wasser, in der Wärmetauscheranordnung 10 kondensieren. Dabei kann sich die kondensierte Flüssigkeit im Bereich der Abgasaustrittsöffnung 40 ansammeln und durch nachfolgend abströmende Abgase aufgewirbelt werden, so dass es in Kontakt mit dem Flammfühler 44 treten kann. Hierdurch kann dieser in seinem Betriebsverhalten derart beeinflusst werden, dass er fälschlicherweise einen Flammabbruch signalisiert, woraufhin die Steuerungsvorrichtung unnötig einen Neustart des Fahrzeugheizgeräts initialisiert.

Um eine derartige Situation vermeiden zu können, sind bei der in den Figuren dargestellten Wärmetauscheranordnung 10 mehrere Flüssigkeitsaufnahmebereiche 46, 48 in Umfangsrichtung aufeinanderfolgend, beidseits der Abgasaustrittsöffnung 40 bereitgestellt. Diese können im Bereich des Flammfühlers 44 kondensierte Flüssigkeit aufnehmen und dadurch effizient verhindern, dass sie durch abströmende Abgase aufgewirbelt wird und in Kontakt mit dem Flammfühler 44 tritt. Durch die hier gewählte Anordnung der Flüssigkeitsaufnahmebereiche 46, 48 in Umfangsrichtung beidseits der Abgasaustrittsöffnung 40 kann die in der Wärmetauscheranordnung 10 kondensierte Flüssigkeit im Wesentlichen unabhängig von der Einbaulage der Wärmetauscheranordnung 10 in einem der beiden hier gezeigten Flüssigkeitsaufnahmebereiche 46, 48 aufgenommen werden.

Die Flüssigkeitsaufnahmebereiche 46 und 48 sind in dem inneren Gehäuse 12 in Richtung der Längsachse L offen ausgebildet. Hierdurch bietet sich die Möglichkeit, das innere Gehäuse 12 als Gussteil zu fertigen oder wenigstens einen Flüssigkeitsaufnahmebereich 46, 48 nachträglich, beispielsweise durch Fräsen, einzubringen. Im Betrieb sind die in Richtung der Längsachse L offenen Enden, beispielsweise durch eine Abdeckplatte, abgedeckt.

Wie in den Figuren gezeigt, stehen die Flüssigkeitsaufnahmebereiche 46 und 48 über eine jeweilige Öffnung 50, 52 mit einem von dem inneren Gehäuse 14 umschlossenen Innenraum in Verbindung. Hierdurch kann die in den Flüssigkeitsaufnahmebereichen 46 und 48 in einer Startphase des Fahrzeugheizgeräts aufgenommene Kondensflüssigkeit nachfolgend, wenn die Temperatur des inneren Gehäuses 14 ausreichend hoch ist, in den vom inneren Gehäuse 14 umschlossenen Innenraum durch Verdampfen abgegeben und somit zusammen mit ausströmenden Abgasen über die Abgasaustrittsöffnung 40 aus der Wärmetauscheranordnung 10 ausgetragen werden, ohne dass an den Flüssigkeitsaufnahmebereichen 46 und 48 zusätzliche Ablassmittel zum Ablassen der Kondensflüssigkeit bereitgestellt werden müssen.

In der in den Figuren dargestellten Ausführungsform ist die Erstreckung der, Öffnungen 50, 52 in Richtung der Längsachse L und in Umfangsrichtung kleiner als die Erstreckung in Richtung der Längsachse L und in Umfangsrichtung der jeweiligen Flüssigkeitsaufnahmebereiche 46, 48. Hierdurch kann dafür gesorgt werden, dass ein Großteil der jeweiligen Flüssigkeitsaufnahmebereiche 46, 48 vom inneren Gehäuse 14 abgedeckt ist. Dadurch wird die tatsächliche Wechselwirkungsfläche zwischen vorbeiströmenden Abgasen und in einem Flüssigkeitsaufnahmebereich 46, 48 gesammelter Kondensflüssigkeit sehr klein, so dass es unwahrscheinlich ist, dass Kondensflüssigkeit aufgewirbelt wird und dadurch in Kontakt mit dem Flammfühler 44 tritt.

Um kondensierte Flüssigkeit besonders effektiv sammeln zu können, ist dem Flüssigkeitsaufnahmebereich 46 ein Flüssigkeitsführungskanal 54 zugeordnet, welcher zwischen der Abgasaustrittsöffnung 40 und dem Flüssigkeitsaufnahmebereich 46 bereitgestellt ist. Dieser ist in der hier dargestellten Ausführungsform durch einen Absatz 56 von dem umgebenden Bereich des inneren Gehäuses 14 abgesetzt. Mit Hilfe dieses Flüssigkeitsführungskanals 54 kann insbesondere im Bereich der Abgasaustrittsöffnung 40 kondensierte Flüssigkeit besonders effektiv zu dem Flüssigkeitsaufnahmebereich 46 geleitet werden. Grundsätzlich kann auch, anders als in der hier dargestellten Ausführungsform, jedem Flüssigkeitsaufnahmebereich ein derartiger Flüssigkeitsführungskanal zugeordnet sein.

## Patentansprüche

1. Fahrzeugheizgerät, umfassend eine Wärmetauscheranordnung (10), wobei die Wärmetauscheranordnung (10) umfasst:
- ein eine äußere Bodenwandung (16) und eine sich entlang einer Längsachse (L) erstreckende äußere Umfangswandung (18) aufweisendes äußeres topfartiges Gehäuse (12),
- ein eine innere Bodenwandung (20) und eine sich entlang der Längsachse (L) erstreckende innere Umfangswandung (22) aufweisendes inneres topfartiges Gehäuse (14), wobei zwischen dem inneren Gehäuse (14) und dem äußeren Gehäuse (12) ein Strömungsraum (24) für zu temperierendes Fluid gebildet ist, und wobei in einem von der inneren Bodenwandung (20) und der inneren Umfangswandung (22) des inneren Gehäuses (14) umschlossenen Innenraum Abgase zu einer Abgasaustrittsöffnung (40) strömen,
**dadurch gekennzeichnet, dass** im Bereich der Abgasaustrittsöffnung (40) wenigstens ein Flüssigkeitsaufnahmebereich (46, 48) zum Sammeln von in dem inneren Gehäuse (14) kondensierter Flüssigkeit vorgesehen ist, und dass wenigstens einer des wenigstens einen Flüssigkeitsaufnahmebereichs (46, 48) über eine Öffnung (50, 52) am inneren Gehäuse(14) mit dem vom inneren Gehäuse (14) umschlossenen Innenraum in Verbindung steht, wobei die Öffnung (50, 52) in Umfangsrichtung oder/und in Richtung der Längsachse (L) eine kleinere Erstreckung als der Flüssigkeitsaufnahmebereich (46, 48) aufweist.

2. Fahrzeugheizgerät nach Anspruch 1,
**dadurch gekennzeichnet, dass** wenigstens ein Flüssigkeitsaufnahmebereich (46, 48) am inneren Gehäuse (14) gebildet ist.

3. Fahrzeugheizgerät nach einem der vorhergehenden Ansprüche,
**dadurch gekennzeichnet, dass** wenigstens einem Flüssigkeitsaufnahmebereich (46) wenigstens ein, vorzugsweise durch einen stufenartigen Absatz (56) bereitgestellter, Flüssigkeitsführungskanal (56) zum Führen von kondensierter Flüssigkeit zu dem Flüssigkeitsaufnahmebereich (46) hin zugeordnet ist.

4. Fahrzeugheizgerät nach einem der vorhergehenden Ansprüche,
**dadurch gekennzeichnet, dass** die Abgasaustrittsöffnung (40) in einem von der inneren Bodenwandung (20) in Richtung der Längsachse (L) entfernten Endbereich des inneren Gehäuses (14) vorgesehen ist.

5. Fahrzeugheizgerät nach Anspruch 3 und 4,
**dadurch gekennzeichnet, dass** wenigstens ein Flüssigkeitsführungskanal (54) von der Abgasaustrittsöffnung (40) zu einem Flüssigkeitsaufnahmebereich (46) führt.

6. Fahrzeugheizgerät nach einem der vorhergehenden Ansprüche,
**dadurch gekennzeichnet, dass** eine Mehrzahl von in Umfangsrichtung aufeinander folgend angeordneten Flüssigkeitsaufnahmebereichen (46, 48) vorgesehen ist.

7. Fahrzeugheizgerät nach Anspruch 6,
**dadurch gekennzeichnet, dass** in Umfangsrichtung beidseits der Abgasaustrittsöffnung (40) jeweils mindestens ein Flüssigkeitsaufnahmebereich (46, 48) vorgesehen ist.

8. Fahrzeugheizgerät nach einem der vorhergehenden Ansprüche,
**dadurch gekennzeichnet, dass** wenigstens ein Flüssigkeitsaufnahmebereich (46, 48) im inneren Gehäuse (14) in Richtung der Längsachse (L) offen ausgebildet ist.

9. Fahrzeugheizgerät nach einem der vorhergehenden Ansprüche,
**dadurch gekennzeichnet, dass** an dem wenigstens einen Flüssigkeitsaufnahmebereich (46, 48) keine Ablassmittel zum Ablassen von Kondensflüssigkeit bereitgestellt sind.

10. Fahrzeugheizgerät nach einem der vorhergehenden Ansprüche,
**dadurch gekennzeichnet, dass** im Bereich der Abgasaustrittsöffnung (40) ein Flammfühler (44) vorgesehen ist.

11. Fahrzeugheizgerät nach einem der vorhergehenden Ansprüche,
**dadurch gekennzeichnet, dass** jeder Flüssigkeitsaufnahmebereich (46, 48) über eine Öffnung (50, 52) am inneren Gehäuse(14) mit dem vom inneren Gehäuse (14) umschlossenen Innenraum in Verbindung steht.

## Claims

1. Vehicle heating device, comprising a heat exchanger arrangement (10), said heat exchanger arrangement (10) comprising:
- an outer pot-like housing (12) having an outer bottom wall (16) and an outer circumferential wall (18) extending along a longitudinal axis (L),
- an inner pot-like housing (14) having an inner bottom wall (20) and an inner circumferential wall (22) extending along the longitudinal axis (L), wherein a flow space (24) is formed for fluid whose temperature is to be regulated between the inner housing (14) and the outer housing (12), and wherein in an inner space enclosed by the inner bottom wall (20) and the inner circumferential wall (22) of the inner housing (14) exhaust gases flow towards an exhaust gas outlet opening (40),
**characterized in that** in the area of the exhaust gas outlet opening (40) at least one liquid uptake area (46, 48) is formed for taking up liquid condensed in the inner housing (14) and **in that** at least one of the at least one liquid uptake area (46, 48) is in connection with the inner space enclosed by the inner housing (14) via an opening (50, 52) on the inner housing (14), wherein the opening (50, 52) has a smaller extension in the circumferential direction or/and in the direction of the longitudinal axis (L) than the liquid uptake area (46, 48).

2. Vehicle heating device according to claim 1,
**characterized in that** at least one liquid uptake area (46, 48) is formed at the inner housing (14).

3. Vehicle heating device according to one of the preceding claims,
**characterized in that** at least one liquid guide channel (56) provided preferably by a step-like shoulder (56) is associated with at least one liquid uptake area (46) for guiding condensed liquid towards the liquid uptake area (46).

4. Vehicle heating device according to one of the preceding claims,
**characterized in that** the exhaust gas outlet opening (40) is provided preferably in an end area of the inner housing (14) which is located at a distance from the inner bottom wall (20) in the direction of the longitudinal axis (L).

5. Vehicle heating device according to claim 3 and 4,
**characterized in that** at least one liquid guide channel (54) leads from the exhaust gas outlet opening (40) to a liquid uptake area (46).

6. Vehicle heating device according to one of the preceding claims,
**characterized in that** a plurality of liquid uptake areas (46, 48) arranged one after another in the circumferential direction are provided.

7. Vehicle heating device according to claim 6,
**characterized in that** at least one liquid uptake area (46, 48) each is provided in the circumferential direction on both sides of the exhaust gas outlet opening (40).

8. Vehicle heating device according to one of the preceding claims,
**characterized in that** at least one liquid uptake area (46, 48) in the inner housing (14) is designed open in the direction of the longitudinal axis (L).

9. Vehicle heating device according to one of the preceding claims,
**characterized in that** at the at least one liquid uptake area (46, 48) there are no outlet means for discharging condensed liquid.

10. Vehicle heating device according to one of the preceding claims,
**characterized in that** a flame sensor (44) is provided in the area of the exhaust gas outlet opening (40).

11. Vehicle heating device according to one of the preceding claims,
**characterized in that** each liquid uptake area (46, 48) communicates via an opening (50, 52) at the inner housing (14) with the inner space enclosed by the inner housing (14).

## Revendications

1. Dispositif de chauffage pour un véhicule, comprenant un arrangement d'échangeur de chaleur (10), l'arrangement d'échangeur de chaleur (10) comprenant:
- un boîtier extérieur (12) en forme de pot comprenant une paroi de fond extérieur (16) et une paroi circonférentiel extérieur (18) s'étendant le long d'un axe longitudinal (L),
- un boîtier intérieur (14) en forme de pot comprenant une paroi de fond intérieur (20) et une paroi circonférentiel intérieur (22) s'étendant le long de l'axe longitudinal (L), un espace de circulation (24) pour un fluide à tempérer étant formé entre le boîtier intérieur (14) et le boîtier extérieur (12), et des gaz d'échappement circulant vers une ouverture de sortie de gaz d'échappement (40) dans un espace intérieur entouré par la paroi de fond intérieur (20) et la paroi circonférentiel intérieur (22) du boîtier intérieur (14),
**caractérisé en ce que** dans la région de la sortie de gaz d'échappement (40) au moins une région de réception de liquide (46, 48) est prévue pour accumuler du liquide condensé dans le boîtier intérieur (14), et **en ce qu'**au moins une de ladite au moins une région de réception de liquide (46, 48) communique via une ouverture (50, 52) au boîtier intérieur (14) avec l'espace intérieur entouré par le boîtier intérieur (14), l'ouverture (50, 52) ayant une moindre extension dans le sens circonférentiel ou/et dans le sens de l'axe longitudinal (L) que la région de réception de liquide (46, 48).

2. Dispositif de chauffage selon la revendication 1,
**caractérisé en ce qu'**au moins une région de réception de liquide (46, 48) est formée au boîtier intérieur (14).

3. Dispositif de chauffage selon une des revendications précédentes,
**caractérisé en ce qu'**au moins un canal de guidage de liquide (56) pour guider du liquide condensé vers la région de réception de liquide (46), de préférence prévue par un échelon (56) est associé à au moins une région de réception de liquide (46).

4. Dispositif de chauffage selon une des revendications précédentes,
**caractérisé en ce que** la sortie de gaz d'échappement (40) est prévue dans une région d'extrémité du boîtier intérieur (14) éloignée de la paroi de fond intérieur (20) dans le sens de l'axe longitudinal (L).

5. Dispositif de chauffage selon la revendication 3 et 4,
**caractérisé en ce qu'**au moins un canal de guidage de liquide (54) mène de l'ouverture de sortie de gaz d'échappement (40) vers une région de réception de liquide (46).

6. Dispositif de chauffage selon une des revendications précédentes,
**caractérisé en ce qu'**une pluralité de régions de réception de liquide (46, 48) est prévue, se succédant dans le sens circonférentiel.

7. Dispositif de chauffage selon la revendication 6,
**caractérisé en ce qu'**au moins une région de réception de liquide (46, 48) respective est prévue sur les deux côtés de la sortie de gaz d'échappement (40) dans le sens circonférentiel.

8. Dispositif de chauffage selon une des revendications précédentes,
**caractérisé en ce qu'**au moins une région de réception de liquide (46, 48) respective est formé de manière ouverte dans le boîtier intérieur (14) dans le sens de l'axe longitudinal (L).

9. Dispositif de chauffage selon une des revendications précédentes,
**caractérisé en ce qu'**à ladite au moins une région de réception de liquide (46, 48) il n'y a pas de moyens d'évacuation pour évacuer du liquide de condensation.

10. Dispositif de chauffage selon une des revendications précédentes,
**caractérisé en ce qu'**un capteur de flamme (44) est prévu dans la région de la sortie de gaz d'échappement (40).

11. Dispositif de chauffage selon une des revendications précédentes,
**caractérisé en ce que** chaque région de réception de liquide (46, 48) communique via une ouverture (50, 52) au boîtier intérieur (14) avec l'espace intérieur entouré par le boîtier intérieur (14).
